# EUROPÄISCHE PATENTANMELDUNG

(11) **EP 2 716 496 A1**
(43) Veröffentlichungstag der Anmeldung: **09.04.2014**
(21) Anmeldenummer: 12187276.6
(22) Anmeldetag: 04.10.2012
(51) Int. Cl.: B60P 3/00, B62D 35/00

(54) **Innenlader**

(71) Anmelder: Van Huët Glastransport B.V., 6596 MP Milsbeek (NL)
(72) Erfinder: Emons, Daan Johannes Martinus Christiaan, 6604 GV Wijchen (NL)
(74) Vertreter: Dörner, Kötter & Kollegen

(57) **Zusammenfassung**

Die Erfindung betrifft einen Innenlader für den Transport von Glasscheibenpaketen, mit einem Chassis (1), umfassend zwei parallel zueinander angeordnete Längsträger, die an einem Ende über einen Querträger miteinander verbunden sind, sowie einen mit diesem verbundenen Aufbau (3), umfassend zwei Längsseitenwände (33) und zwei Querseitenwände (34, 35), die über einen Dachabschnitt (36) miteinander verbunden sind, wobei in der dem Querträger gegenüberliegenden hinteren Querseitenwand (35) ein Türelement (4) angeordnet ist, wobei die Längsseitenwände (33) nach innen geneigt ausgebildet sind, wobei die dem Türelement (4) abgewandte vordere Querseitenwand zumindest bereichsweise eine Trapezform aufweist.

## Beschreibung

Die Erfindung betrifft einen Innenlader für den Transport von Glasscheibenpaketen nach dem Oberbegriff des Patentanspruchs 1.

Innenlader werden vor allem für den Transport großer Glasscheiben eingesetzt, welche eine Höhe von bis zu 3,60 m aufweisen können. Diese werden auf speziellen A- oder L- förmigen Transportgestellen zusammengefasst, welche von Tragprofilen des Innenladers aufgenommen werden können.

Der Innenlader ist eine spezielle Form des Sattelaufliegers. Diese Sattelauflieger haben keine durchgehenden Achsen zwischen den Rädern, sondern eine besondere Form der Einzelradaufhängung, die so genannten Einzelradschwingen. Ein Innenlader weist ein Chassis auf, welches aus zwei Längsträgern gebildet ist, die im vorderen Bereich über Querträger verbunden sind, sodass etwa die Form einer Stimmgabel gebildet ist. Auf dem Chassis ist ein Aufbau angeordnet, das regelmäßig in Form eines Verdeckgestells ausgebildet ist, über das eine Plane gespannt ist. Dabei sind die Aufbauten im Wesentlichen quaderförmig ausgebildet, wobei die Längs- und Querseitenwände senkrecht angeordnet und über einen Dachabschnitt miteinander verbunden sind. Endseitig sind die Längsseitenwände des Aufbaus über ein Türelement verbunden, wodurch der Aufbau zusätzliche Stabilität erlangt. Die quaderförmige, voluminöse Ausgestaltung des Aufbaus ist insbesondere dadurch begründet, dass innerhalb des Glasinnenladers Sicherungssysteme zum Einsatz kommen, bei denen Andruckplatten hydraulisch an das zu sichernde Glaspaket sowie an die Rückseite des zu sichernden Gestells geschwenkt werden.

Die Menge des mit einem Glasinnenlader transportierbaren Glases ist regelmäßig durch dessen Gewicht limitiert. Daher ist es seit jeher ein Bestreben, das Gewicht der Fahrzeuge zu reduzieren, um die transportierbare Glasmenge zu maximieren. Auf diese Weise wird versucht, den ständig steigenden Transportkosten entgegen zu wirken.

Hier setzt die vorliegende Erfindung an. Der Erfindung liegt die Aufgabe zu Grunde, einen Innenlader für den Transport von Glasscheiben bereitzustellen, der ein reduziertes Eigengewicht aufweist und bei dem die Transportkosten minimiert sind. Gemäß der Erfindung wird diese Aufgabe durch die Merkmale des kennzeichnenden Teils des Patentanspruchs 1 gelöst. Dadurch, dass die Längsseitenwände nach innen geneigt ausgebildet sind, wird das Gewicht des Aufbaus reduziert. Darüber hinaus wird hierdurch der cw-Wert des Innenladers signifikant verbessert. Hierzu trägt auch die Trapezform der forderen Querseitenwand bei.

In Weiterbildung der Erfindung ist das Türelement rechteckig ausgebildet, wobei die Breite des Dachabschnitts im Wesentlichen der Breite des Türelements entspricht. Hierdurch wird unter Beibehaltung des rechteckigen maximierten Durchgangs des Türelements eine maximale Neigung der Längsseitenwände erzielt, wodurch ein guter cw-Wert erreicht wird. Unter dem Begriff "Türelement" ist vorliegend der Türrahmen mit der von diesem aufgenommenen Tür zu verstehen.

In vorteilhafter Ausgestaltung der Erfindung ist das Türelement an seinen den Längsseitenwänden zugewandten Seiten nach innen abgeschrägt ausgebildet, wobei die Längsseitenwände im Wesentlichen an den abgeschrägten Abschnitten des Türelements anliegen. Hierdurch ist eine vergrößerte Neigung der Längsseitenwände erzielt, wodurch ein kompakter Aufbau mit reduziertem Gewicht und verbessertem cw-Wert ermöglicht ist.

In weiterer Ausgestaltung der Erfindung weist wenigstens eine Längsseitenwand wenigstens eine verschließbare Öffnung für den temporären Durchtritt eines Stellarms eines Ladungssicherungssystems auf. Hierdurch ist der Einsatz derzeit eingesetzter Sicherungssysteme weiterhin ermöglicht. Der Erkenntnis folgend, dass der große Bewegungsfreiraum für diverse Sicherungssysteme nur temporär nämlich beim Be- bzw. und Entladen der Glasladung erforderlich ist, kann so der benötigte Bewegungsspielraum für die Stellarme des Sicherungssystems bereitgestellt werden. Nach Fixierung der Glasladung können die Öffnungen verschlossen werden, wodurch durchgängig geneigt gespannte Längsseitenwände erzielt sind. Vorteilhaft ist die verschließbare Öffnung durch eine in einer Längsseitenwand integrierte Klappe gebildet. Alternativ kann eine verschließbare Öffnung auch durch eine in einer Seitenwand integrierte Tasche gebildet sein.

Besonders vorteilhaft für die Reduzierung des Gewichts des Aufbaus sowie der Optimierung cw-Wertes hat sich eine Neigung der Längsseitenwände zwischen 10° und 30°, vorzugsweise zwischen 15° und 25° erwiesen, wodurch die größeren Neigungswinkel nur im Zusammenspiel mit der Anschrägung der Seiten des Türelements erzielbar sind. Es hat sich gezeigt, dass selbst bei einer Neigung der Längsseitenwände um 30° eine Beladung der überwiegenden Anzahl von Standardladungen mit Jumbogläsern und den Abmessungen von 6000 mm x 3210 mm auf L-Gestellen ermöglicht ist.

In Weiterbildung der Erfindung ist die dem Türelement angeordnete hintere Querseitenwand nach außen gewölbt ausgebildet. Hierdurch ist der cw-Wert weiter verbessert.

In vorteilhafter Ausgestaltung der Erfindung ist die Haube aus carbonfaserverstärktem Kunststoff (CFK) oder Carbon hergestellt. Hierdurch ist eine große Steifigkeit der Haube, verbunden mit einem geringen Gewicht erzielt, wodurch aerodynamisch optimale Formen bei geringem Gewicht realisierbar sind.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

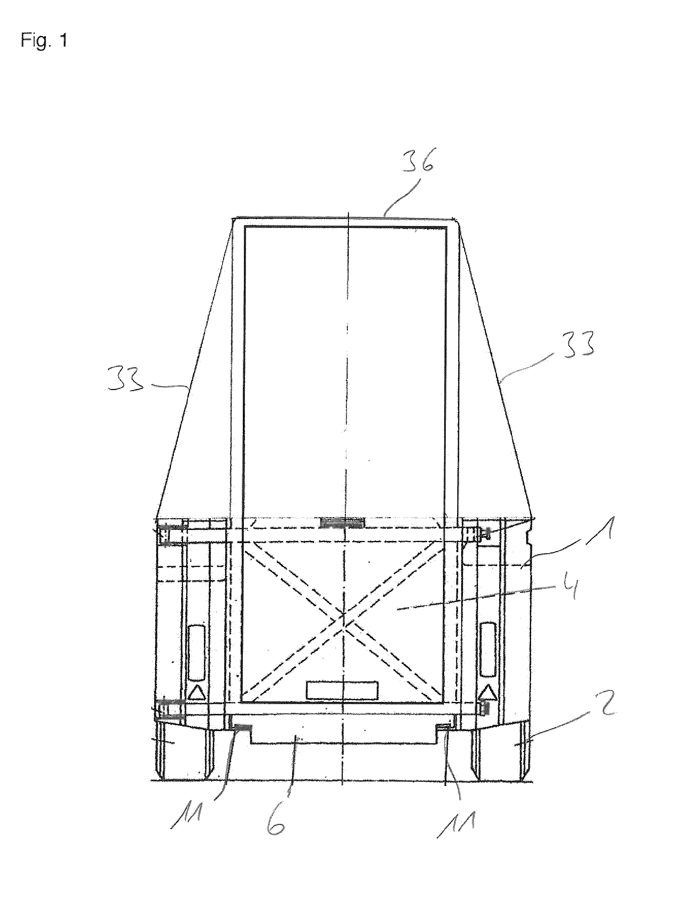

- Figur 1: die schematische Darstellung eines Glasinnenladers in der Ansicht von hinten;
- Figur 2: die Darstellung des Glasinnenladers aus Figur 1 mit angedeutetem L-Gestell und Sicherungseinrichtung;
- Figur 3: die schematische Darstellung des Verdeckgestells des Innenladers aus Figur 1 in Seitenansicht und
- Figur 4: die Darstellung des Verdeckgestells aus Figur 3 in der Draufsicht.

Der als Ausführungsbeispiel gewählte Glasinnenlader besteht im Wesentlichen aus einem Chassis 1, an dem in bekannter Art und Weise Einzelradschwingen 2 angeordnet sind, sowie einem Aufbau 3, der heckseitig ein Türelement 4 aufweist, dass sich bis zur Unterkante des Chassis 1 erstreckt. Weiterhin sind auf dem Chassis 1 Ladungssicherungseinrichtungen 5 zur Fixierung von mit Glaspaketen 61 bestückten, als L-Gestell ausgebildeten Traggestellen 6 angeordnet, welche von gegenüberliegend an dem Chassis 1 innen angeordneten Tragprofilen 11 aufgenommen sind.

Der Aufbau 3 ist im Ausführungsbeispiel gebildet durch ein Verdeckgestell 31, das mit einer Plane 32 bespannt ist. Der so gebildete Aufbau 3 weist zwei um 13° nach innen angewinkelte Längsseitenwände 33 sowie eine vordere Querseitenwand 34 und eine hintere Querseitenwand 35 auf, die über einen Dachabschnitt 36 miteinander verbunden sind. In der hinteren Querseitenwand 35 ist das Türelement 4 angeordnet, wobei die Längsseitenwände 33 das Türelement 4 im Bereich seiner oberen Kanten tangieren, sodass die Breite des Dachabschnitts 36 im Wesentlichen der Breite des Türelements 4 entspricht. Durch Anschrägung des Türelements im oberen Bereich ist die Breite des Türelements 4 an dessen Oberseite reduzierbar, wodurch eine größere Neigung der Längsseitenwände 14 erzielt werden kann.

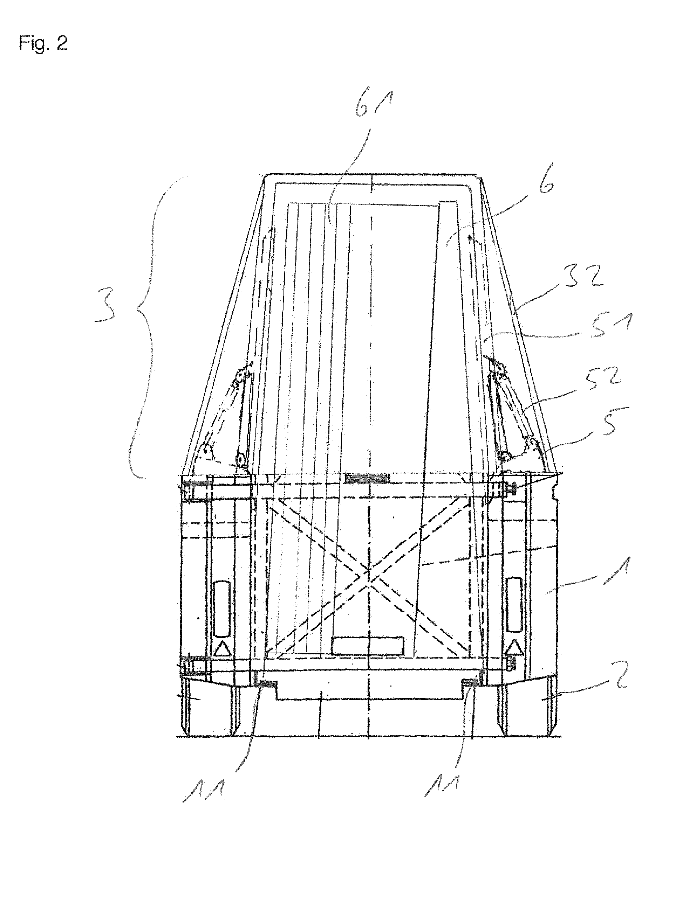

Das Türelement 4 stellt im geschlossenen Zustand eine Verbindung der beiden freien Längsträger des Chassis 1 dar, wodurch die erforderliche Stabilität des Chassis 1 gewährleistet ist. Das Türelement 4 ist über ein Scharnier 41 schwenkbar mit einem Längsträger des Chassis 1 verbunden und über einen Verschluss 42 mit dem gegenüber liegenden Längsträger des Chassis 1 verriegelbar. In Figur 2 ist ein mit einem Glaspaket 61 versehenes Transportgestell 6 innerhalb des Innenladers selbst angeordnet und durch zwei gegenüberliegend angeordnete Ladungssicherungseinrichtungen 5 gesichert. Die Ladungssicherungseinrichtungen 5 weisen Andruckplatten 51 auf, welche über Stellarme 52 hydraulisch an das Glaspaket 61 bzw. an die Rückseite des als L-Gestell ausgeführten Transportgestells 6 angepresst werden. Zur Vergrößerung des zur Verfügung stehenden Schwenkraums für die Ladungssicherungseinrichtungen 5 sind im Ausführungsbeispiel an beiden Längsseitenwänden 33 im Bereich der Stellarme 52 jeweils - nicht dargestellte - temporär ausstellbare Taschen eingearbeitet, welche nach erfolgter Ladungssicherung über Druckknöpfe verschließbar sind. Alternativ können auch verschließbare Klappen angeordnet seien.

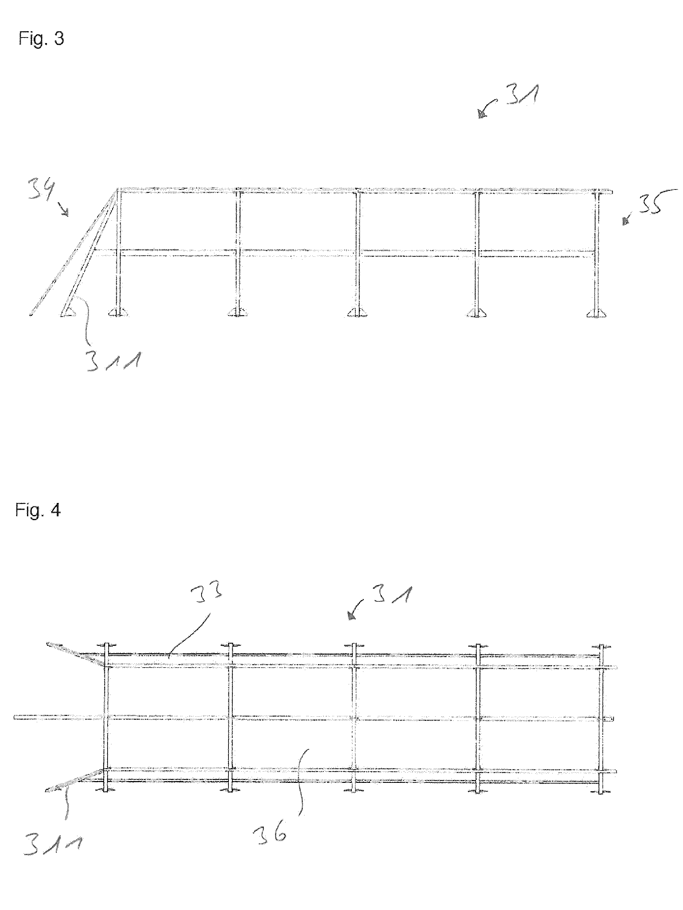

In den Figuren 3 und 4 ist das Verdeckgestell 31 des Aufbaus 3 gezeigt. Dabei ist das Gestell im Bereich der Längsseitenwände 33 nach innen geneigt ausgeführt. Im vorderen Bereich sind zwei ausgestellte Holme 321 angeordnet, welche die Kontur einer Haube ausbilden. Anstelle oder zusätzlich zu diesen Holmen 321 kann das Verdeckgestell 31 mit einer aus CFK oder Carbon hergestellten Haube versehen sein. Diese Fronthaube ist durch die erfindungsgemäße Verdeckform deutlich kleiner ausgeführt und hat einen verbesserten Luftwiderstand. Darüber hinaus kann diese gewichtsreduziert hergestellt werden.

Im Ausführungsbeispiel sind die Traggestelle 6 in der durch die Tragprofile 11 des Chassis 1 gebildeten Aufnahme 1520 mm breit und die Anlagefläche des aufgenommenen Glaspakets 61 ist um ca. 4° geneigt. Bei einer Glaspaketstärke von 900 mm kann die Dachbreite des Verdeckgestells 31 des Aufbaus 3 gegenüber der gängigen Standardbreite im Stand der Technik von ca. 2500 mm auf 1600 mm reduziert werden. Bei gleichzeitiger Anpassung des Türelements 4 ist eine weitere Reduzierung der Breite des Dachabschnitts 36 bis auf ca. 900 mm möglich. Durch den schmalen Dachabschnitt 36 ergibt sich eine Schrägstellung der seitlichen Holme 121 des Planengestells 31. Gegenüber den Aufbauten im Stand der Technik entfallen zwei Längsholme. Gleichzeitig wird durch die Trapezform mit aufgespannter Dachplane 32 eine größere Steifigkeit im Verdeck erreicht, was eine weitere Verringerung im Materialeinsatz ermöglicht.

## Patentansprüche

1. Innenlader für den Transport von Glasscheibenpaketen, mit einem Chassis (1), umfassend zwei parallel zueinander angeordnete Längsträger, die an einem Ende über einen Querträger miteinander verbunden sind, sowie einen mit diesem verbundenen Aufbau (3), umfassend zwei Längsseitenwände (33) und zwei Querseitenwände (34, 35), die über einen Dachabschnitt (36) miteinander verbunden sind, wobei in der dem Querträger gegenüberliegenden hinteren Querseitenwand (35) ein Türelement (4) angeordnet ist, **dadurch gekennzeichnet, dass** die Längsseitenwände (33) nach innen geneigt ausgebildet sind, wobei die dem Türelement (4) abgewandte vordere Querseitenwand zumindest bereichsweise eine Trapezform aufweist.

2. Innenlader nach Anspruch 1, **dadurch gekennzeichnet, dass** die Tür (4) rechteckig ausgebildet ist, wobei die Breite des Dachabschnitts (36) im Wesentlichen der Breite des Türelements (4) entspricht.

3. Innenlader nach Anspruch 1, **dadurch gekennzeichnet, dass** das Türelement (4) an seinen den Längsseitenwänden (33) zugewandten Seiten nach innen abgeschrägt ausgebildet ist, wobei die Längsseitenwände (33) im Wesentlichen an den abgeschrägten Abschnitten des Türelements (4) anliegen.

4. Innenlader nach einem der vorgenannten Ansprüche, **dadurch gekennzeichnet, dass** wenigstens eine Längsseitenwand (33) wenigstens eine verschließbare Öffnung für den temporären Durchtritt eines Stellarms (52) eines Ladungssicherungssystems (5) aufweist.

5. Innenlader nach Anspruch 4, **dadurch gekennzeichnet, dass** die verschließbare Öffnung durch eine in eine Längsseitenwand (33) integrierte Klappe gebildet ist.

6. Innenlader nach Anspruch 4, **dadurch gekennzeichnet, dass** die verschließbare Öffnung durch eine in eine Längsseitenwand (33) integrierte Tasche gebildet ist.

7. Innenlader nach einem der vorgenannten Ansprüche, **dadurch gekennzeichnet, dass** der Aufbau (3) durch ein Verdeckgestell (31) gebildet ist, auf das eine Plane (32) aufgespannt ist, wobei die Neigung der Längsseitenwände (33) durch eine Neidung der Holme (311) des Verdeckgestells (31) gebildet ist.

8. Innenlader nach einem der vorgenannten Ansprüche, **dadurch gekennzeichnet, dass** die Neigung der Längsseitenwände (33) zwischen 10° und 30°, vorzugsweise zwischen 15° und 25° beträgt.

9. Innenlader nach einem der vorgenannten Ansprüche, **dadurch gekennzeichnet, dass** hintere Querseitenwand (35) nach außen gewölbt ausgebildet ist.

10. Innenlader nach Anspruch 9, **dadurch gekennzeichnet, dass** die hintere Querseitenwand (35) in Form einer Haube ausgebildet ist.

11. Innenlader nach Anspruch 10, **dadurch gekennzeichnet, dass** die Haube aus carbonfaserverstärktem Kunststoff (CFK) oder aus Carbon hergestellt ist.
